# EUROPEAN PATENT SPECIFICATION

(11) **EP 2 555 913 B1**
(45) Date of publication and mention of the grant of the patent: **15.02.2017**
(21) Application number: 11765141.4
(22) Date of filing: 07.04.2011
(51) Int. Cl.: B29C 51/02, B29C 47/88, B29C 70/06

(54) **METHOD AND DEVICE FOR FABRICATING A COMPOSITE PRODUCT**
VERFAHREN UND VORRICHTUNG ZUR HERSTELLUNG EINES VERBUNDPRODUKTS
PROCÉDÉ ET DISPOSITIF DE FABRICATION D'UN PRODUIT COMPOSITE

(30) Priority: 08.04.2010 FI 20105358
(43) Date of publication of application: 13.02.2013
(73) Proprietor: Varis, Juha, 53100 Lappeenranta (FI); Kärki, Timo, 55800 Imatra (FI)
(72) Inventor: Varis, Juha, 53100 Lappeenranta (FI); Kärki, Timo, 55800 Imatra (FI)
(74) Representative: Papula Oy
(86) International application number: PCT/FI2011/050301
(87) International publication number: WO 2011/124766

(56) References cited:
- EP-A1- 0 847 845
- WO-A1-02/14051
- CA-A1- 2 407 880
- GB-A- 2 059 328
- US-A- 4 248 651
- US-A1- 2005 183 816
- US-A1- 2006 244 174
- US-A1- 2008 083 735
- US-B1- 6 814 905

## Description

### FIELD OF THE INVENTION

The invention relates to a method as defined in the preamble of claim 1 and to a device as defined in the preamble of claim 10 for fabricating a composite product.

### BACKGROUND OF THE INVENTION

Known from the prior art are various methods and raw materials to fabricate various composite products and composite materials from e.g. paper-based materials and plastics. Known from the prior art is fabrication of composite products, using extrusion technology, from plastic-based raw materials.

In addition to that, known from the prior art is fabrication of plastic and polymer products using extrusion technique and dies as well as injection moulding.

From US 2006/2441174 is known a method for producing expanded thermoformable honeycomb materials. From US 6814905 is known a continuous process for making a thermoplastic article. From US 5614228 is known an apparatus for producing an ovenable shaped article. From US 2008/83735 is known a heating apparatus. From GB 2059328 is known a method for the production of mouldings from a thermoplastic material. From EP 847845 is known a flat thermoformable sheet having more than one layer. From US 4248651 is known an improved thermoforming process for the production of formed articles of corrugated plastic board. From US 2005/183816 is known a method for production of structural components.

### OBJECTIVE OF THE INVENTION

The objective of the invention is to disclose a new, easily adjustable method and device to fabricate composite products.

### SUMMARY OF THE INVENTION

The method and the device according to the invention are characterized by what has been presented in the claims.

The invention is based on a method to fabricate a composite product, where an intermediate product is formed from at least one chosen raw material including fibre containing material and polymer-based material, by an extrusion, and a composite product is shaped from the intermediate product by at least one shaping tool. According to the invention, during the extrusion, the cross-sectional profile of the intermediate product is shaped at least with one extrusion tool and after the extrusion tool, the temperature of the intermediate product is controlled so that in different parts of the cross sectional profile of the intermediate product different temperature zones are arranged according to the predetermined target values of the temperature ranges and the temperature of the intermediate product is adjusted in different parts of the cross sectional profile, between 50 - 250 degrees Celsius, to facilitate further processing of the intermediate product and shaping of the composite product. The predetermined temperature ranges are determined by and, for their part, dependable on the shape of the composite product. Preferably, the warmer zone is easier to machine and shape, whereas the cooled zone can be made more rigid and unwanted forming will not happen. Preferably, arranging different temperature zones into different parts of the cross-sectional profile of the intermediate product is made before shaping the intermediate product into a composite product or during the shaping. The composite product is shaped from the intermediate product with the shaping tool which is based on pressing.

The invention is based on a device to fabricate composite products, which device includes feeding device for feeding at least one raw material, extrusion device for fabricating an intermediate product with the help of extrusion from raw material and at least one shaping tool to shape the intermediate product into the composite product. According to the invention, the device includes at least one extrusion tool arranged in connection with the extrusion device to shape the cross-sectional profile of the intermediate product, temperature controlling device to control the temperature of the formed intermediate product after the extrusion tool and regulating device to adjust and regulate the temperature controlling device so that in different parts of the cross-sectional profile of the intermediate product different temperature zones are arranged according to predetermined target values of the temperature ranges and the temperature of the intermediate product is adjusted in different parts of the cross sectional profile, between 50 - 250 degrees Celsius, and the shaping tool is based on pressing. Preferably, the device is uniform or integrated ensemble, where, with consecutive phases, a composite product may be fabricated from raw-material through an intermediate product phase.

Controlling the temperature means, in this connection, measuring the temperature and adjusting the temperature when needed. Adjusting the temperature can be performed by cooling, heating or keeping the temperature unaltered.

A shaping tool means, in this connection, any tool, known from the prior art, used for shaping when a composite product is formed of an intermediate prod uct, for example, a tool based on bending, forming, shaping or cutting or a tool based on a similar work phase or a combination of various work phases. The shape of the final product is achieved with the shaping tool, completely or at least partly.

A cross-sectional profile means, in this connection, a cross-sectional profile of the intermediate product to be formed and a cross-sectional profile of the formed intermediate product. Preferably, the cross-sectional profile is shaped, in this invention, so that different material strengths and shapes are arranged, when needed, in different parts of it.

The invention is specifically based on a method and device for fabricating a formed composite product directly from source materials so that the shape of the cross-sectional profile of the intermediate product is modified and the temperature is controlled to facilitate and accelerate the shaping of the composite product to be formed. In addition to that, the intermediate product can be pre-machined before shaping the composite product to be formed to facilitate and accelerate the shaping. Preferably, the composite product is fabricated in one integrated and compact process, from raw-materials to a composite product. The fabrication can be carried out in continuous or batch wise production. Preferably, the device is connected and integrated ensemble, in which a composite product can be formed from raw materials through an intermediate product phase so that the intermediate product is modified to facilitate the fabrication of the finished composite product.

In one embodiment of the invention, the raw material contains 30 - 99 percent by weight of fibre containing material and 1 - 60 percent by weight of polymer based material. Raw material means, in this connection, one raw material or a mixture of several raw materials. One raw material can contain fibre containing material and/or polymer based material. A fibre containing material means, in this connection, any fibre-based material, preferably natural fibres such as organic fibres, bio fibres, wood fibres, cellulose fibres, paper and various mixtures of these. A polymer based material means, in this connection, any polymers, organic polymers, plastic, rubber-based components and similar materials. In one embodiment, polymer based raw material is selected from a group of polyolefins, e.g. polyethylene or polyprophene, polyesters, polycarbonates, polyamides, polymers containing fluorides, polymers containing chlorine, polyvinyl chlorides, polystyrenes, polyethylene terephthalate (PET) and mixtures of these or other similar polymers suitable for the purpose. In one embodiment, the polymer based raw material is starch based polymer. Virgin raw materials, waste materials, secondary raw materials and mixtures of these or any suitable raw materials may be used as raw materials.

Preferably, in one embodiment, the raw material consists mostly of waste material, secondary material, recycled material, logging residues, or similar material left over or classified as waste.

In one embodiment, at least a part of the raw material is grinded. In one embodiment, most of the raw material is grinded. In one embodiment, most of the fibre based raw material is grinded into a particle size of less than 5 mm, preferably, into a particle size of less than 2.5 mm. Preferably, in the embodiment, fibre based raw material consists of both short fibres and longer fibres. In one embodiment, fibre based raw material contains very small sized fibre material in which the particle size is less than 0.5 mm. In one embodiment, a grinding machine is included in the device to grind at least part of the raw material. In one embodiment, a crushing machine is included in the device to crush at least part of the raw material. In one embodiment, a crushing machine and a grinding machine are included in the device, and the crushing machine is arranged before the grinding machine to crush at least part of the raw material and the grinding machine is arranged to grind the crushed material.

An intermediate product means, in this connection, any filmy material, membrane, film, sheet or any sheet type material that can be in form of plate, sheet or in any form suitable for the purposed use, or tube shaped, bar shaped, pouch shaped, concave shaped, u-shaped or band shaped intermediate product or any kind of an extrusion product.

In one embodiment of the invention, an intermediate product is formulated, the form of which is selected from the group of film, membrane, sheet, profile, e.g. C-profile, U-profile, V-profile, L-profile or any other suitable profile, tube, bar, any other suitable form and combinations of these.

In one embodiment, a membranous intermediate product containing at least two layers, which may have surfaces touching each other or at a distance, is produced.

The intermediate product may be fabricated using any extrusion method known from the prior art as such and utilizing any extrusion tool suitable for the purpose or more than one extrusion tool to shape the cross sectional profile of the intermediate product. Extrusion means, in connection with this invention, any known extrusion method or co-extrusion method or a combination of these.

Preferably, extrusion is carried out with an extrusion tool known as such with work phases and parts belonging to it. Preferably, in this invention, the extrusion tool is arranged in connection with extrusion device, either as a part of the extrusion device or substantially after it.

In one embodiment of the invention, an intermediate product is fabricated by using a twin screw extrusion device. In one embodiment, the extrusion device may be cylindrical or conical twin screw extrusion device.

In one embodiment, the extrusion tool includes a nozzle tool and the intermediate product is fabricated with the help of the nozzle tool. Preferably, the cross sectional profile of the intermediate product is adjusted with the nozzle of the tool during the fabrication. In this case, different material strengths and shapes are obtained in the cross section and in different parts of it and thus, a cross sectional profile is achieved.

In one embodiment, the intermediate product is modified during the fabrication by changing its thickness or shape in one or more desired points of the cross section. Modification of the thickness or shape may be performed by any method known as such, e.g. by pressing, adding material or in any other suitable way.

In one embodiment, a membranous intermediate product is fabricated using co-extrusion. The intermediate product may contain one or more layers. Various layers may be made of the same or different material composition and their thickness may be same or different.

In one embodiment, a membranous intermediate product may be coated on one or both sides prior to the forming phase. In one embodiment, coating is performed by the help of co-extrusion.

Preferably, in one embodiment, a nozzle tool contains an upper part and a lower part. In one embodiment, a nozzle tool, which has a structurally different upper part and lower part, is used. Preferably, the shaping of the cross section of the intermediate product and flow during the forming of the intermediate product may be adjusted with different lower and upper surfaces of the nozzle tool. In an alternative embodiment, the upper and lower part of the nozzle tool is essentially similar.

In one embodiment, the extrusion tool contains so called on/off parts and/or active parts which may be regulated and adjusted to facilitate and accelerate the forming of the intermediate product or the cross sectional profile of the intermediate product. Preferably, by choosing the right extrusion tool, the surface of the intermediate product may be modified as well, e.g. by corrugating the surface, or to create an edge to the intermediate product, which is dense, non-dusty and/or does not absorb moisture or fluids.

In one embodiment, the forming of the intermediate product is performed within a temperature range of 130 - 250 degrees Celsius depending on the raw material used.

In one embodiment, the intermediate product is foamed during the fabrication, i.e. the intermediate product is in foaming form after the fabrication. With this embodiment, special features may be achieved in the composite product.

In one embodiment of the invention, the intermediate product is fabricated by enriching polymer at its surface. In one embodiment, polymer may be made to enrich at the surface of the intermediate product by using in the fabrication process an extrusion tool with upper and lower surfaces modified in an appropriate manner, e.g. the upper surface and the lower surface having different roughness. In one embodiment, the intermediate product is fabricated so that polymer is enriched at its surface, i.e. the density of the polymer is greater at the surface of the intermediate product than in other parts of the product. In one embodiment, the finer polymer substance is arranged at the surface of the intermediate product. In one embodiment, the polymer may be made to enrich at the surface of the intermediate product in suitable temperature, e.g. 170 - 190 degrees Celsius, the particle size distribution of the fibre containing material being: 50 % 0 - 0.5 mm, 30 % 0.5 - 1.0 mm, 20 % 1.0-1.5 mm, and forming the intermediate product by using an extrusion tool with upper surface and lower surface having been modified to be different. In one embodiment, enrichment takes place within temperature range of 95 - 230 degrees Celsius. When polymer enriches at the surface of the intermediate product, the product and particularly its surface gets plastic like features. Barrier features are achieved with plastic. The surface will be easier to form and it can be made smooth and plain which is useful, for example, if the product will be used as a dish to which a lid is attached with any known method using heat and plastic melting. Plastic like features enable to use many typical processes before or during the next work phase.

In one embodiment of the invention, a material allocation is made in the intermediate product with the help of a predetermined cross sectional profile, e.g., so that the cross sectional profile contains concave shaped, corrugated or similar form that contains a material allocation which can be utilized in further processing of the intermediate product or in fabricating the composite product to achieve a specific form. In further processing or in fabrication of the composite product any forming method known as such may be used, for example, method based on stretch forming, deep drawing technology or a combination of these or method using over pressure and/or vacuum or any other forming technology known.

In one embodiment, after the extrusion tool, the temperature of the intermediate product is adjusted in different parts of the cross sectional profile, between 50 - 250 degrees Celsius, preferably between 50 - 200 degrees Celsius, depending on the raw material used and on predetermined temperature ranges of the cross sectional profile.

In one embodiment of the invention, the temperature controlling device has been adjusted in the device so that the temperature control reaches over the whole cross sectional profile of the intermediate product.

In one embodiment of the invention, the temperature controlling device contains a measuring device, cooling device and/or heating device to control and adjust the temperature.

In one embodiment, the temperature controlling device contains at least one cooling device which has been arranged to cool the intermediate product track or a part of it, after the extrusion tool, to control, i.e. to adjust, the temperature of the intermediate product. Any device known as such and suitable for the purpose can be used as cooling device. Preferably, in the embodiment, the cooling does not take place as direct cooling with cooling substance, but the cooling substance, e.g. fluid, cools the medium substance, e.g. metal, which cools the intermediate product.

In one embodiment, the temperature controlling device has been arranged substantially after the extrusion tool. In one embodiment, the temperature controlling device has been arranged in suitable distance of the extrusion tool.

In one embodiment of the invention, the intermediate product is pre-machined after the temperature control and preferably, before the shaping tool, to facilitate and accelerate the shaping of the composite product. There can be one or more than one pre-machining phases. Pre-machining phase may be selected from the group of bending, pressing, punching, 2D or 3D shaping, cutting, cutting the edges, treatment of the edges, bending of the edges, making holes, edging, compression of the edges, smoothing of the edges, closing the dusty edges and/or absorbing edges, coating, attaching additional parts, punching, folding, embossing, perforating and various combinations of these. Preferably, in one embodiment, closing of the moisture and fluid absorbing edges and easier further shaping of the intermediate product and the composite product are achieved by flattening the edges of the intermediate product, and in addition to that, the fabricated composite product is suitable for autoclaving and asepsis. In one embodiment, the device includes at least one pre-machining tool to pre-machine the intermediate product. In one embodiment, more than one pre-machining tools are included in the device to pre-machine the intermediate product.

In one embodiment, at least two intermediate products may be joined together to fabricate a layered composite product before the temperature control of the intermediate product or in pre-machining phase before shaping the composite product. Intermediate products may have been fabricated from the same or different material composition, and they may have same thickness or different thickness.

Preferably, in the forming phase of a composite product a form is shaped for a composite product with the help of at least one shaping tool. The forming phase of a composite product may include additional phases such as bending, pressing, punching, 2D or 3D shaping, cutting, cutting the edges, treatment of the edges, bending of the edges, making holes, edging, compression of the edges, smoothing of the edges, closing the dusty edges and/or absorbing edges, coating, attaching additional parts, punching, folding, embossing, perforating and various combinations of these. In one embodiment, the device includes more than one shaping tool. In one embodiment, shaping is performed with one shaping tool in one forming phase or in several forming phases, e.g., by utilizing a so called multi station tool.

In one embodiment, the shaping of the inter-mediate product into the composite product is made with a forming phase based on pressing and with a shaping tool.

In one embodiment, the shaping tool includes an upper tool and/or a lower tool to shape the intermediate product, e.g. by pressing, into a form of a desired composite product. In one embodiment, the upper tool and the lower tool of the shaping tool has been arranged with surface structures differing from each other. In one embodiment, the lower tool has been arranged with a rougher surface than the upper tool. In an alternative embodiment, the surface structures of the lower tool and the upper tool of the shaping tool are substantially similar. The same type of tools or alternatively, different type of tools may be used as upper and lower tools. For example, if a tool that has been made of hard and wear-resistant material is used as the upper tool, urethane or similar material, or fluid in various manners, adapting to the form of the upper tool can be used as the lower tool, against which the intermediate product is pressed and against which the forming is performed with the upper tool. In one embodiment, over pressure and/or vacuum may be used with the tool.

In one embodiment, at least one shaping tool or a part of it, e.g., an upper tool or a lower tool, can be a so called precision tool, to form a precise shape, or a so called shape forming tool, to achieve a more cursory, partial or sufficient shape.

A shaping tool or a part of it may be a so called fixed tool or alternatively, a so called flexible i.e. adapting tool, which can be adjusted according to the fabricated product, e.g. a single product. Short life cycle tools fabricated with rapid tooling technology may be used as shaping tools as well. Furthermore, tools generated with laser technology may be used as tools. In addition to that, shaping tools and their technology may be based on modularity.

In one embodiment, the shaping tool contains so called on/off parts and/or active parts which can be regulated and adjusted to facilitate and accelerate the shaping or to achieve a unique design.

In one embodiment of the invention, the fabricated composite product is post machined in the post machining phase. In one embodiment, the device includes at least one post machining phase to post machine the formed composite product. The post machining phase may be a phase of its own after the shaping of the composite product or it can be included in the forming phase of the composite product. In one embodiment, the post machining may be performed with a shaping tool. In one embodiment, post machining may include bending, pressing, punching, 2D or 3D shaping, bending the edges upwards or downwards, making holes, attaching additional parts, cutting the corners, cutting the edges, treatment of the edges, compression of the edges, smoothing of the edges, closing the dusty edges and/or absorbing surfaces of the edges, coating, punching, folding, embossing, perforating and attaching various sensors and electronics and combinations of these.

In one embodiment, at least two fabricated composite products may be joined together to form the final laminar end product in the post machining phase.

In one embodiment, pre-machining, shaping of the composite product and/or post machining phase may be performed with linear technology and/or along a track from one point to another, for example using upwards/downwards type of technology. In one embodiment, pre-machining, shaping of the composite product and/or the post machining phase may be performed with spinning tools or tools using rotation like track. In an alternative embodiment, pre-machining, shaping of the composite product and/or post machining phase may be performed with any suitable tools.

In one embodiment, an additional coating or an additional film is arranged at least at one surface of the fabricated composite product and/or surface treatment, coating treatment and/or impregnation treatment is performed on the composite product, preferably, in connection with a pressing tool acting as a shaping tool in pressing phase or after the shaping tool as a post machining phase. In one embodiment, an additional coating or an additional film is arranged at least at one surface of the intermediate product and/or surface treatment, coating treatment and/or impregnation treatment is performed on the intermediate product before its shaping into a composite product. In one embodiment, a coating which increases material strength or area is arranged as an additional coating at least at one surface of the intermediate product, the coating may spread in banded shape and reach the whole surface or a part of the surface. In one embodiment, this kind of additional coating, which spreads in banded shape, is glutinous. In one embodiment, the additional film or the additional coating may have been made of polymeric materials, plastics, bio-based materials, various fillers, additives and mixtures of these. Surface treatment, coating treatment and impregnation treatment may be performed with any known method as such and materials known as such, that are compatible with a method according to the invention. The surface treatment, particularly post shaping treatment, may contain, in addition to standard surface treatments, attaching various stickers, bar codes, identifiers or similar and printing the surface, also with conducting materials.

A composite product may contain suitable fillers, adhesives and/or additives, e.g. colorants or coupling agents. Any substances suitable for the purpose and required for the purpose may be used as fillers, coupling agents and additives. In one embodiment, fillers, adhesives and/or additives may have been added into the raw material before forming the intermediate product, e.g. during the extrusion.

In one fabrication embodiment, the feeding speed of raw materials is regulated. In one embodiment, the fabricating speed of the composite product is regulated. Flows may be adjusted with small adjustments.

In one embodiment, the composite product is fabricated so that raw material is grinded and mixed and desired additives are added, raw material is fed into the extrusion, an intermediate product, e.g. film material, is fabricated with the help of the extrusion tool and the cross sectional profile of the intermediate product is modified simultaneously, and the temperature of the intermediate product is controlled regarding to the cross sectional profile of the intermediate product in accordance with desired temperature zones and a composite product is formed from an intermediate product with at least one shaping tool.

The method and the device according to the invention may be used to fabricate a product of any kind and any shape, which is suitable to be fabricated in accordance with the invention. The invention may be utilized in production of e.g. various boxes, cases, containers, trays and similar products. In addition to that, the invention may be utilized in production of other formed, objects and products, for example shoe soles, as curved soles or multiform soles, shoe horns, dishes, door knobs, various handles, gear wheels, covers for mobile phones, moulds and other applications. In addition to that, the invention may be utilized in production of layered products.

The method and the device according to the invention provide considerable advantages as compared to the prior art.

Thanks to the invention, composite material products of desired shape can be fabricated from raw material in simple, energy, water and cost efficient way in one fell swoop and in one fabricating process without intermediate storage phases.

With the method and the device according to the invention various shapes may readily be formed to the composite products. In addition to that, e.g. stiffening folds or other rigid forms may readily be arranged to tray type products.

With the method and the device according to the invention, it is possible to fabricate recycled products from waste material.

With the invention, a facile, simple and affordable method to fabricate a composite product, with industrial applicability, is achieved. The investment costs of the device are low compared to traditional solutions. In addition to that, a new ecological method to recycle waste material to a recycled product is achieved.

### FIGURE INDEX

Figure 1 illustrates a device according to the invention, and
Figure 2 illustrates a forming of a package according to the invention as a simplified picture series.

### DETAILED DESCRIPTION OF THE INVENTION

In the following section, the invention will be described by detailed examples of its embodiments with reference to attached figures.

### Example 1

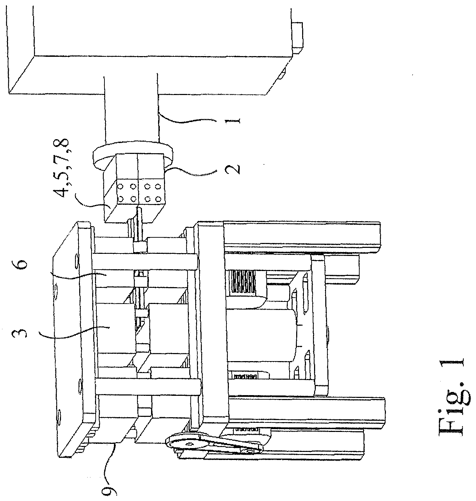

Figure 1 illustrates a device according to the invention, including feeding device for raw material (not illustrated in the figure), twin screw extrusion device 1 and extrusion tool 2, arranged in connection with it, which has a nozzle part to form an intermediate product and to shape its cross sectional profile. A modular or continuous width regulation and continuous length regulation is included in extrusion tool 2. Extrusion tool 2 may include a cutting part to form the intermediate product by cutting. In addition to that, the device includes temperature controlling device 4, which include a measuring apparatus 7, a cooling apparatus 5 and heating apparatus 8, to control the temperature of the intermediate product and regulating device (not illustrated in the figure) to adjust and regulate the temperature controlling device 4 so that different temperature zones according to determined limit values of the temperature may be arranged in different parts of the cross sectional profile of the intermediate product. In addition to that, the device includes as a pre-machining tool 6 a cutting apparatus for edges and corners to shape the intermediate product before forming the final composite product and a shaping tool for composite product 3 which is based on pressing and folding of the edges as a post machining phase 9 coupled with the shaping tool 3. Alternatively, in this connection, post machining phase may include another post machining, e.g. embossing phase or phase for attaching an rfid-sticker, or a combination of more than one post machining phases.

The device in figure 1 is an integrated ensemble in which every part has been integrated as a connected ensemble and in which a composite product may be fabricated in one fell swoop from raw material.

When the device is a compact ensemble according to figure 1, composite products may be fabricated from raw materials, also in small factory and storage facilities. When flexible tools are used as machining and shaping tools, various single packages may be fabricated even in small batches.

### Example 2

In this experiment, packages were fabricated from logging residues and recycled plastics. Waste material was crushed and grinded into an appropriate particle size, in this embodiment, a particle size of less than 2.5 mm.

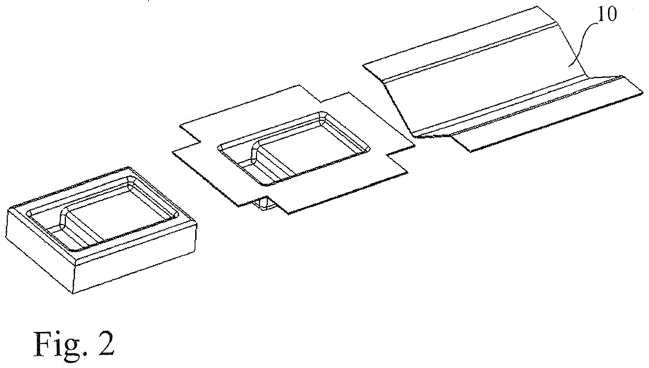

Packages, the like of which is illustrated in figure 2, were formed with a device as presented in example 1. First, a membranous intermediate product, the thickness of which was predominantly between 1 - 2 mm, was fabricated with the help of extrusion and an extrusion tool. The cross sectional profile of the intermediate product was shaped with one extrusion tool. As the purpose was to form rectangular, deep packages, tagged bending points were arranged in the parts of the film where the film was bended later on to form a bend between the upper surface and the edge of the package. In addition to that, a material allocation 10 was arranged to the cross sectional profile of the film, according to figure 2, to facilitate the further forming of the intermediate product. The cross sectional profile of the film could be formed with the help of the nozzle of the extrusion tool, which had different upper structure and lower structure. The temperature of the intermediate product was controlled immediately after the extrusion and specific, predetermined points of the cross sectional profile were cooled to get different temperature zones according to target values of the temperature ranges to different parts of the cross sectional profile of the intermediate product and thus more rigid sections and more flexibly formable sections were achieved in the intermediate product. The warmer section, e.g. 170 degrees Celsius, was easier to work on and form while the cooled section, e.g. 120 degrees Celsius, could be made more rigid and thus unwanted forming did not exist. Thereafter, the intermediate product was pre-machined by cutting the edges and corners with one cutting tool to get a package preform and finally, from an intermediate product, which was in the form of a package preform, a composite product, i.e. a package, was formed, with the help of a shaping tool which was based on pressing. In addition to that, the shaping tool included a post machining phase of the composite product, where the edges of the package were bent downwards.

With the method and the device according to the invention, composition packages with desired shape were achieved in easy, fast and flexible way.

### Example 3

In this experiment, composite products were fabricated from crushed waste plastics, i.e. plastic bottles containing paper based material, e.g. labels, and of shredded paper, with a device as in figure 1.

The waste plastics was crushed and mixed with shredded paper which was grinded to produce raw material. Raw material was fed into extrusion where a flat, thin film material was fabricated by extruding with an appropriate nozzle. Simultaneously, the cross sectional profile of the film material was modified by arranging the bending points of the composite dishes to be formed. The temperature of the film material was measured and it was adjusted by cooling the intermediate product to the desired temperature level. Thereafter, the film material was directed to pressing phase to form composite products from the film material by a pressing tool. In connection with the pressing, framing and conditioning the edges of the composite product was performed, for example, by closing moisture and fluid absorbing and/or dusty edges.

The formed dishes could be coated with additional coating, i.e. by feeding an additional plastic film at the inner surface of the dishes during the pressing phase, which added more barrier features. In further phases, plastics at the surface facilitates, for example, the tight closing of the lid performed with heat during the lid adding phase.

According to the invention, composite dishes of desired shape were fabricated in easy, fast and flexible way.

### Example 4

According to this example, composite products are fabricated of cellulose based raw material and waste plastics, with a device modified from the type of a device in example 1.

Two intermediate products in shape of thin sheet material are fabricated with extrusion device and extrusion nozzle tools. The first intermediate product is formed of fibre based raw material and waste plastics and the other intermediate product is formed of waste plastics in which rubber based composition can be mixed if desired. The cross sectional profiles of both products are formed substantially similarly.

The two fabricated intermediate products are joined together to fabricate a laminar composite product prior to the forming of a composite product. Prior to the forming, the temperature of the joined intermediate product is controlled and different temperature zones are arranged in different parts of the cross sectional profile to facilitate the forming.

A curved shoe sole, which also includes a heel part and a flat surface for attaching the heel part, is formed from a laminar intermediate product using a shaping tool. The processing phase includes pre-machining phase to cut the edges and thus getting the correct shape and post machining phase to treat the edges.

According to the invention, one layer or multi layered composite products of desired shape are achieved in easy, fast and flexible way.

The method and the device according to the invention, in various applications, are applicable to production of most different composite products, such as package products for food, package products for piece goods, package products for electronics and similar, or production of package products which can replace, for example, carton based products, corrugated cardboard or moulded pulp products or production of composite products which can replace various composite or plastic structures, parts or products and their operational applications used in prior art.

The invention is not limited merely to the examples referred above, instead, many variations are possible within the scope of the claims.

## Claims

1. A method to fabricate a composite product, where an intermediate product is formed from raw material including fibre containing material and polymer based material with the help of extrusion and a composite product is shaped from the intermediate product with at least one shaping tool (3), **characterised in that** the cross sectional profile of the intermediate product is shaped with at least one extrusion tool (2) during the extrusion and the temperature of the intermediate product is controlled after the extrusion tool (2) so that in different parts of the cross sectional profile of the intermediate product different temperature zones are arranged according to the predetermined target values of the temperature ranges and the temperature of the intermediate product is adjusted in different parts of the cross sectional profile, between 50 - 250 degrees Celsius, and the composite product is shaped from the intermediate product with the shaping tool (3) which is based on pressing.

2. The method according to claim 1, **characterised in that** the raw material includes 30 - 99 % by weight of fibre containing material and 1 - 60 % by weight of polymer based material.

3. The method according to claim 1 or 2, **characterised in that** the intermediate product is formed by using a twin screw extrusion device.

4. The method according to any of claims 1 to 3, **characterised in that** the intermediate product is fabricated, the shape of which is selected from the group of film, membrane, sheet, profile, tube, bar and combinations of these.

5. The method according to any of claims 1 to 4, **characterised in that** the intermediate product is foamed during the fabrication.

6. The method according to any of claims 1 to 5, **characterised in that** the intermediate product is fabricated so that polymer is enriched at its surface.

7. The method according to any of claims 1 to 6, **characterised in that** a material allocation is made in the intermediate product with the help of a predetermined cross sectional profile for further processing of the intermediate product.

8. The method according to any of claims 1 to 7, **characterised in that** the intermediate product is pre-machined after the temperature control.

9. The method according to any of claims 1 to 8, **characterised in that** the formed composite product is post machined.

10. A device for fabricating a composite product, which device includes feeding device for feeding at least one raw material, extrusion device (1) for fabricating an intermediate product with the help of extrusion from raw material and at least one shaping tool (3) to shape the intermediate product into the composite product, **characterised in that** the device includes at least one extrusion tool (2), arranged in connection with the extrusion device (1), to shape the cross sectional profile of the intermediate product, temperature controlling device (4) to control the temperature of the formed intermediate product after the extrusion tool (2) and regulating device to adjust and regulate the temperature controlling device so that in different parts of the cross sectional profile of the intermediate product different temperature zones are arranged according to predetermined target values of the temperature ranges and the temperature of the intermediate product is adjusted in different parts of the cross sectional profile, between 50 - 250 degrees Celsius, and the shaping tool (3) is based on pressing.

11. A device according to the claim 10, **characterised in that** the extrusion device (1) is a twin screw extrusion device.

12. A device according to any of claims 10 to 11, **characterised in that** the temperature controlling device (4) has been adjusted in the device so that the temperature control reaches over the whole cross sectional profile of the intermediate product.

13. A device according to any of claims 10 to 12, **characterised in that** the temperature controlling device (4) contains measuring device (7), cooling device (5) and/or heating device (8).

14. A device according to any of claims 10 to 13, **characterised in that** the surface of the upper part and/or the lower part of at least one extrusion tool (2) has been shaped so that enrichment of polymer at the surface of the intermediate product is achieved.

15. A device according to any of claims 10 to 14, **characterised in that** the device includes at least one pre-machining device (6) to pre-machine the intermediate product prior to the shaping tool (3).

16. A device according to any of claims 10 to 15, **characterised in that** the device includes at least one post machining phase (9) to machine the formed composite product.

17. A device according to any of claims 10 to 16, **characterised in that** the device contains grinding device to grind at least part of raw material.

## Patentansprüche

1. Verfahren zur Herstellung eines Verbundprodukts, bei dem ein Zwischenprodukt gebildet wird aus Ausgangsmaterial mit Fasern enthaltendem Material und auf Polymer basierendem Material mit Hilfe von Extrusion, und aus dem Zwischenprodukt mit mindestens einem Formungswerkzeug (3) ein Verbundprodukt geformt wird, **dadurch gekennzeichnet, dass** das Querschnittsprofil des Zwischenprodukts mit mindestens einem Presswerkzeug (2) während der Extrusion geformt wird, und die Temperatur des Zwischenprodukts nach dem Presswerkzeug (2) überwacht wird, so dass in unterschiedlichen Teilen des Querschnittsprofils des Zwischenprodukts unterschiedliche Temperaturbereiche entsprechend den vorbestimmten Zielwerten der Temperaturbereiche eingerichtet werden, und die Temperatur des Zwischenprodukts in unterschiedlichen Teilen des Querschnittsprofils zwischen 50 °C bis 250 °C eingestellt wird, und das Verbundprodukt aus dem Zwischenprodukt mit dem Formungswerkzeug (3) geformt wird, was auf dem Pressen beruht.

2. Verfahren nach Anspruch 1, **dadurch gekennzeichnet, dass** das Ausgangsmaterial 30 bis 99 Gewicht-% Fasern enthaltendes Material und 1 bis 60 Gewicht-% polymerbasiertes Material enthält.

3. Verfahren nach Anspruch 1 oder 2, **dadurch gekennzeichnet, dass** das Zwischenprodukt unter Verwendung eines Doppelschneckenextruders gebildet wird.

4. Verfahren nach einem der Ansprüche 1 bis 3, **dadurch gekennzeichnet, dass** das Zwischenprodukt hergestellt wird, wobei dessen Form ausgewählt ist aus der Gruppe von Folie, Membran, Blatt, Profil, Rohr, Stab und Kombinationen von diesen.

5. Verfahren nach einem der Ansprüche 1 bis 4, **dadurch gekennzeichnet, dass** das Zwischenprodukt während der Herstellung geschäumt wird.

6. Verfahren nach einem der Ansprüche 1 bis 5, **dadurch gekennzeichnet, dass** das Zwischenprodukt so hergestellt wird, dass an seiner Oberfläche Polymer angereichert ist.

7. Verfahren nach einem der Ansprüche 1 bis 6, **dadurch gekennzeichnet, dass** eine Materialzuordnung in dem Zwischenprodukt mit Hilfe eines vorbestimmten Querschnittsprofils zur weiteren Verarbeitung des Zwischenprodukts vorgenommen wird.

8. Verfahren nach einem der Ansprüche 1 bis 7, **dadurch gekennzeichnet, dass** das Zwischenprodukt nach der Temperaturüberwachung vorgefertigt wird.

9. Verfahren nach einem der Ansprüche 1 bis 8, **dadurch gekennzeichnet, dass** das gebildete Verbundprodukt nachgefertigt wird.

10. Vorrichtung zur Herstellung eines Verbundprodukts, wobei die Vorrichtung eine Zuführeinrichtung zum Zuführen von mindestens einem Ausgangsmaterial, einen Extruder (1) zur Herstellung eines Zwischenprodukts mit Hilfe von Extrusion aus Ausgangsmaterial und mindestens ein Formungswerkzeug (3) umfasst, um das Zwischenprodukt zu dem Verbundprodukt zu formen, **dadurch gekennzeichnet, dass** die Vorrichtung mindestens ein Presswerkzeug (2) umfasst, das in Verbindung mit dem Extruder (1) eingerichtet ist, um das Querschnittsprofil des Zwischenprodukts zu formen, Temperaturüberwachungseinrichtung (4) zum Überwachen der Temperatur des gebildeten Zwischenprodukts nach dem Presswerkzeug (2) und Reguliereinrichtung zum Verstellen und Regulieren der Temperaturüberwachungseinrichtung, so dass in unterschiedlichen Teilen des Querschnittsprofils des Zwischenprodukts unterschiedliche Temperaturbereiche entsprechend vorbestimmten Zielwerten der Temperaturbereiche eingerichtet werden, und die Temperatur des Zwischenprodukts in unterschiedlichen Teilen des Querschnittsprofils zwischen 50 °C bis 250 °C eingestellt wird, und das Formungswerkzeug (3) auf dem Pressen basiert.

11. Vorrichtung nach Anspruch 10, **dadurch gekennzeichnet, dass** der Extruder (1) ein Doppelschneckenextruder ist.

12. Vorrichtung nach einem der Ansprüche 10 bis 11, **dadurch gekennzeichnet, dass** die Temperaturüberwachungseinrichtung (4) in der Vorrichtung so eingestellt wurde, dass die Temperaturüberwachung über das gesamte Querschnittsprofil des Zwischenprodukts reicht.

13. Vorrichtung nach einem der Ansprüche 10 bis 12, **dadurch gekennzeichnet, dass** die Temperaturüberwachungseinrichtung (4) eine Messvorrichtung (7), Kühlvorrichtung (5) und/oder Heizvorrichtung (8) umfasst.

14. Vorrichtung nach einem der Ansprüche 10 bis 13, **dadurch gekennzeichnet, dass** die Oberfläche des oberen Teils und/oder des unteren Teils von mindestens einem Presswerkzeug (2) so geformt worden ist, dass an der Oberfläche des Zwischenprodukts eine Anreicherung von Polymer erzielt wird.

15. Vorrichtung nach einem der Ansprüche 10 bis 14, **dadurch gekennzeichnet, dass** die Vorrichtung mindestens eine Vorfertigungsvorrichtung (6) enthält, um das Zwischenprodukt vor dem Formungswerkzeug (3) vorzufertigen.

16. Vorrichtung nach einem der Ansprüche 10 bis 15, **dadurch gekennzeichnet, dass** die Vorrichtung mindestens eine Nachfertigungsphase (9) umfasst, um das gebildete Verbundprodukt maschinell zu bearbeiten.

17. Vorrichtung nach einem der Ansprüche 10 bis 16, **dadurch gekennzeichnet, dass** die Vorrichtung eine Schleifvorrichtung zum Schleifen von zumindest einem Teil des Ausgangsmaterials enthält.

## Revendications

1. Procédé de fabrication d'un produit composite, selon lequel, un produit intermédiaire est formé d'une matière première comprenant une matière contenant des fibres et une matière à base de polymère au moyen d'une extrusion, et un produit composite est formé à partir du produit intermédiaire à l'aide d'au moins un outil de formage (3), **caractérisé en ce que** le profil de section transversale du produit intermédiaire est formé à l'aide d'au moins un outil d'extrusion (2) au cours de l'extrusion et la température du produit intermédiaire est commandée après l'outil d'extrusion (2) de sorte que dans des parties différentes du profil de section transversale des zones de températures différentes de produit intermédiaire soient organisées conformément aux valeurs cibles prédéterminées des plages de températures et que la température du produit intermédiaire soit ajustée dans des parties différentes du profil de section transversale, entre 50 et 250 degrés Celsius, et **en ce que** le produit composite soit formé à partir du produit intermédiaire à l'aide de l'outil de formage (3) qui repose sur un pressage.

2. Procédé selon la revendication 1, **caractérisé en ce que** la matière première comprend de 30 à 99 % en poids de matière contenant des fibres et de 1 à 60 % en poids de matière à base de polymère.

3. Procédé selon la revendication 1 ou 2, **caractérisé en ce que** le produit intermédiaire est formé au moyen d'un dispositif d'extrusion à double vis.

4. Procédé selon l'une quelconque des revendications 1 à 3, **caractérisé en ce que** le produit intermédiaire est fabriqué, sa forme étant sélectionnée à partir du groupe constitué d'un film, d'une membrane, d'une feuille, d'un profilé, d'un tube, d'une barre et de combinaisons de ces derniers.

5. Procédé selon l'une quelconque des revendications 1 à 4, **caractérisé en ce que** le produit intermédiaire est expansé pendant la fabrication.

6. Procédé selon l'une quelconque des revendications 1 à 5, **caractérisé en ce que** le produit intermédiaire est fabriqué de façon à ce que le polymère soit enrichi à sa surface.

7. Procédé selon l'une quelconque des revendications 1 à 6, **caractérisé en ce qu'**une attribution de matière est effectuée dans le produit intermédiaire au moyen d'un profil de section transversale prédéterminé à des fins de traitement supplémentaire du produit intermédiaire.

8. Procédé selon l'une quelconque des revendications 1 à 7, **caractérisé en ce que** le produit intermédiaire est usiné au préalable après la commande de température.

9. Procédé selon l'une quelconque des revendications 1 à 8, **caractérisé en ce que** le produit composite formé est usiné ultérieurement.

10. Dispositif de fabrication d'un produit composite, ledit dispositif comprenant un dispositif d'alimentation destiné à alimenter au moins une matière première, un dispositif d'extrusion (1) destiné à fabriquer un produit intermédiaire au moyen d'une extrusion de matière première, et au moins un outil de formage (3) servant à former le produit intermédiaire en produit composite, **caractérisé en ce que** le dispositif comprend au moins un outil d'extrusion (2), disposé de façon à communiquer avec le dispositif d'extrusion (1), pour former le profil de section transversale du produit intermédiaire, un dispositif de commande de température (4) servant à commander la température du produit intermédiaire formé après l'outil d'extrusion (2) et un dispositif de régulation servant à régler et à réguler le dispositif de commande de température de sorte que dans des parties différentes du profil de section transversale des zones de températures différentes de produit intermédiaire soient organisées conformément à des valeurs cibles prédéterminées des plages de températures et que la température du produit intermédiaire soit ajustée dans des parties différentes du profil de section transversale, entre 50 et 250 degrés Celsius, et **en ce que** l'outil de formage (3) est basé sur un pressage.

11. Dispositif selon la revendication 10, **caractérisé en ce que** le dispositif d'extrusion (1) est un dispositif d'extrusion à double vis.

12. Dispositif selon l'une quelconque des revendications 10 et 11, **caractérisé en ce que** le dispositif de commande de température (4) a fait l'objet d'un réglage dans le dispositif de façon à obtenir la commande de température sur tout le profil de section transversale du produit intermédiaire.

13. Dispositif selon l'une quelconque des revendications 10 à 12, **caractérisé en ce que** le dispositif de commande de température (4) contient un dispositif de mesure (7), un dispositif de refroidissement (5) et/ou un dispositif de chauffe (8).

14. Dispositif selon l'une quelconque des revendications 10 à 13, **caractérisé en ce que** la surface de la partie supérieure et/ou de la partie inférieure d'au moins un outil d'extrusion (2) a été formée de façon à obtenir un enrichissement de polymère au niveau de la surface du produit intermédiaire.

15. Dispositif selon l'une quelconque des revendications 10 à 14, **caractérisé en ce que** le dispositif comprend au moins un dispositif d'usinage préalable (6) servant à usiner au préalable le produit intermédiaire avant l'outil de formage (3).

16. Dispositif selon l'une quelconque des revendications 10 à 15, **caractérisé en ce que** le dispositif comprend au moins une phase d'usinage postérieur (9) permettant d'usiner le produit composite formé.

17. Dispositif selon l'une quelconque des revendications 10 à 16, **caractérisé en ce que** le dispositif contient un dispositif de meulage servant à meuler au moins une partie de matière première.
